# EUROPÄISCHE PATENTSCHRIFT

(11) **EP 1 248 022 B1**
(45) Veröffentlichungstag und Bekanntmachung des Hinweises auf die Patenterteilung: **10.05.2006**
(21) Anmeldenummer: 02003964.0
(22) Anmeldetag: 22.02.2002
(51) Int. Cl.: F16J 9/20

(54) **Kolbenringanordnung für Kolben von Hubkolbenmaschinen, insbesondere Brennkraftmaschinen**
Piston ring arrangement for piston in a reciprocating piston machine, in particular combustion engine
Dispositif de segments pour piston de machine à pistons alternatifs, en particulier pour moteur à explosion

(30) Priorität: 06.04.2001 DE 10117164
(43) Veröffentlichungstag der Anmeldung: 09.10.2002
(73) Patentinhaber: Bayerische Motoren Werke Aktiengesellschaft, 80809 München (DE)
(72) Erfinder: Daiker, Klaus, 72818 Trochtelfingen-Mägerkingen (DE); Tremmel, Hans, 80689 München (DE)

(56) Entgegenhaltungen:
- EP-A- 0 950 840
- CH-A- 206 790
- DE-A- 4 327 621
- DE-A- 10 016 158
- DE-A- 19 851 424
- DE-U- 8 503 197
- SU-A- 1 364 761

## Beschreibung

Die Erfindung bezieht sich nach dem Oberbegriff des Patentanspruches 1 auf eine Kolbenringanordnung für Kolben von Hubkolbenmaschinen, insbesondere Brennkraftmaschinen, umfassend einen in einer Nut des Kolbens angeordneten Ölabstreifringmit einem vorbestimmten Höhen/Breiten-Verhältnis, der von einem auf den Ringinnenumfang radial nach außen wirkenden Federelement beaufschlagt ist, und dem ferner eine das abgestreifte Öl aufnehmende Ausnehmung im Kolben zugeordnet ist.

Eine derartige Kolbenringanordnung ist sowohl aus der DE 100 16 158 A1 als auch aus der DE 43 27 621 A1 bekannt. Bei jeder der bekannten Anordnungen weist der jeweilige Ölabstreifring eine relativ große radiale Ausdehnung auf und damit eine hohe Biegesteifigkeit, so dass in Verbindung mit einem relativ hohen Elastizitätsmodul des Ringmaterials trotz eines radial nach außen wirkenden Federelementes ein schlechtes Formfüllvermögen und damit eine unzureichende Ölabstreifwirkung gegeben ist.

Weiter ist aus der DE-OS 24 43 299 ein Ölabstreifring für einen Kolben einer Brennkraftmaschine bekannt, bei dem das abgestreift Öl über am Umfang des Ölabstreifringes verteilt angeordnete Schlitze und weitere Ablaufkanäle in das Kolbeninnere abgeführt wird. Zur Vermeidung wechselnder Zonen von geringerer Steifigkeit und höherer Steifigkeit werden bei diesem Ölabstreifring zur Verbesserung des Formfüllvermögens Materialabtragungen am Ringinnenumfang zwischen den Schlitzen vorgeschlagen. Mit den Materialabtragungen wird ein Flächenträgheitsmoment in diesem Querschnitt vorgeschlagen, das etwa gleich dem Flächenträgheitsmoment im Bereich der Schlitze ist. Mit dieser Maßnahme soll insgesamt eine gleichmäßigere Flächenpressung sowie ein besseres Formfüllvermögen erzeugt werden.

Eine weitere Maßnahme zur Steigerung des Formfüllvermögens für einen Ölabstreifring zeigt und beschreibt die DE 198 08 483 C2, wonach ein Ölabstreifring für eine Brennkraftmaschine mit über den Umfang verteilt angeordneten Radialschlitzen versehen ist, wobei die Radialschlitze sich durch den Kolbenringquerschnitt bis zumindest einen Laufsteg hin erstrecken. Nachteilig bei dieser Gestaltung ist, dass der Ölabstreifring aufgrund seiner vielen Querschnittsschwächungen schwingungsempfindlich und damit bruchgefährdet ist.

Schließlich ist zur Steigerung des Formfüllvermögens aus der DE 198 17 269 C1 ein aus einem profilierten Stahlband gefertigter Ölabstreifring bekannt, bei dem zur Lagesicherung eines radial nach außen wirkenden Federelementes dieser bekannte Ölabstreifring an seiner Ringinnenumfangsseite eine aus einem elastomeren Werkstoff gebildete Federaufnahme aufweist. Mit dieser bekannten Federaufnahme aus einem elastomeren Werkstoff besteht insbesondere bei Hochleistungs-Brennkraftmaschinen die Gefahr eines vorzeitigen Ausfalls dieses Ölabstreifringes.

Aufgabe der Erfindung ist die Bildung eines einen Vollquerschnitt aufweisenden Ölabstreifringes von minimierter Tangentialkraft bei über das Federelement bewirktem maximalem Formfüllvermögen.

Diese Aufgabe ist mit dem Patentanspruch 1 gelöst.

Mit der erfindungsgemäßen Kolbenringanordnung ist in vorteilhafter Weise erreicht, dass der im wesentlichen eigenspannungsfreie Ölabstreifring über das Federelement durch das Höhen/Breiten-Verhältnis H/B von ca. 1,5 in radialer Richtung leicht elastisch verformbar ist und sich somit den Verformungen einer Zylinderlaufbahn, insbesondere temperaturbedingten Unrundheiten leicht anpasst, womit ein gutes Formfüllvermögen bei gleichmäßiger Pressungsverteilung erreicht ist. Aufgrund des sehr hohen Formfüllvermögens ist eine deutliche Absenkung der Tangentialkraft möglich, wodurch sich die Kolbenringreibung reduziert und sich dadurch der Wirkungsgrad der Brennkraftmaschine erhöht. Weiter ist mit der erfindungsgemäßen Kolbenringanordnung eine Absenkung des Ölverbrauches und damit eine Reduktion der Kohlenwasserstoff-Emissionen erreicht.

Im Hinblick auf einen einfach zu gestaltenden Vollquerschnitt in Verbindung mit hoher Ölabstreif-Wirkung ist der Leichtmetall-Ölabstreifring als Einstegring in der Ausführung eines Minuten- bzw. Nasen-Minutenringes gestaltet.

Als weiteres kennzeichnendes Kombinationsmerkmal ist der Leichtmetall-Ölabstreifring aus einer Aluminium-Legierung mit einer die gesamte Ringoberfläche bedeckenden Verschleißschutzschicht und/oder aus einer Hartstoffkörper enthaltenden Aluminium-Legierung gebildet. Letzteres ist z. B. aus der DE 198 51 424 A1 bekannt und z.B. für einen Kompressionsring gezeigt.

Der erfindungsgemäß gewählte Minuten- bzw. Nasen-Minutenring ist aufgrund seines Vollquerschnittes vorteilhaft geeignet, wenn dem Leichtmetall-Ölabstreif ring im Kolben eine umlaufend angeordnete Ausnehmung mit in das Kolbeninnere gerichteten Drainage-Kanälen zugeordnet ist. Bei dieser Kombination kann die Öl aufnehmende Ausnehmung relativ flach aber relativ hoch ausgebildet werden, so dass der durch das hohe Formfüllvermögen des erfindungsgemäßen Ölabstreifringes erforderliche Sammelraum ohne Schwächung des Kolbens erzielt ist, wobei die vorgesehenen Drainage-Kanäle in einer das Abfließen unterstützenden Richtung in das Kolbeninnere vorteilhaft angeordnet werden können.

In Ausgestaltung der Erfindung nach Anspruch 2 weist zur sicheren Erhöhung des Formfüllvermögens der Leichtmetall-Ölabstreifring an seinem Ringinnenumfang eine mit einem als Schlauchfeder gestalteten Federelement korrespondierende Umfangsnut auf. Um jede abschnittsweise Einwirkung in radialer Richtung der Schlauchfeder in der Umfangsnut des erfindungsgemäßen Ölabstreifringes zu gewährleisten, ist die Umfangsnut insbesondere im Hinblick auf die Verschleißschutzeinrichtungen reibungsarm gestaltet.

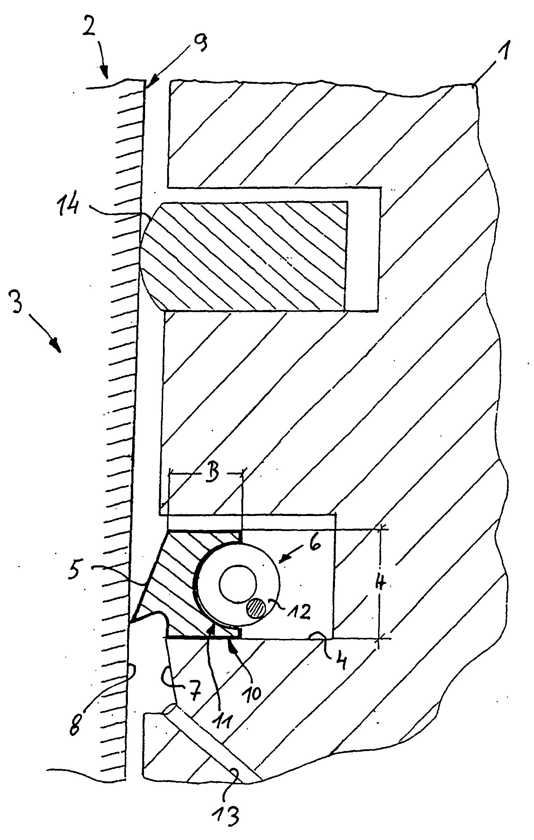

Die Erfindung ist anhand eines in der Zeichnung dargestellten Ausführungsbeispiels beschrieben.

Ein lediglich abschnittsweise im Schnitt dargestellter Kolben 1 einer nicht näher gezeigten Brennkraftmaschine 2 umfasst eine Kolbenringanordnung 3 mit einem in einer Nut 4 des Kolbens 1 angeordneten Ölabstreifring 5, der von einem auf den Ringinnenumfang radial nach außen wirkenden Federelement 6 beaufschlagt ist. Weiter ist dem Ölabstreifring 5 eine das abgestreifte Öl aufnehmende Ausnehmung 7 im Kolben 1 zugeordnet.

Zur Erzielung eines einen Vollquerschnitt aufweisenden Ölabstreifringes 5 von minimierter Tangentialkraft bei über das Federelement 6 bewirkten maximalen Formfüllvermögen wird erfindungsgemäß vorgeschlagen, dass der Ölabstreifring 5 ein gegen Verschleiß geschützt ausgebildeter Leichtmetallring ist, der ein Höhen/Breiten-Verhältnis von H/B ≧1 aufweist.

Zur Erzielung eines hohen Formfüllvermögens des Ölabstreifringes ist angesichts der erfindungsgemäßen Kombination eines Leichtmetall-Ölabstreifringes 5 mit einem Höhen/Breiten-Verhältnis insbesondere >1 die aus der Zeichnung ersichtliche Gestaltung des Leichtmetall-Ölabstreifringes 5 als Einstegring bevorzugt in der Ausführung eines Nasen-Minutenringes.

Um aufgabengemäß einen Ölabstreifring 5 im wesentlichen eigenspannungsfrei bzw. mit minimierter Tangentialkraft auszubilden, ist dieser erfindungsgemäß nicht nur aus einer Leichtmetall-Legierung gebildet, sondern vorzugsweise auch in einem Höhen/Breiten-Verhältnis von ca. 1,5 gestaltet. Somit weist der erfindungsgemäß gestaltete Leichtmetall-Ölabstreifring 5 ein reduziertes Widerstandsmoment auf gegen die in radialer Richtung mittels des Federelementes 6 bewirkten Verformung auf. Der Leichtmetall-Ölabstreifring 5 verfügt somit über ein hohes Formfüllvermögen bei gleichmäßiger Pressungsverteilung, so dass der an einer Zylinderwandung 8 eines nicht näher gezeigten Zylinders 9 gleitend anliegende Leichtmetall-Ölabstreifring 5 sich vorteilhaft anpassen kann.

Leichtmetall-Legierungen für Kolbenringe auf der Basis von Aluminium- und/oder Magnesium sind aus der Patentliteratur beispielsweise aus der DE-PS 814 683 und der DE 198 51 424 A1 bekannt. Zur Steigerung der Verschleißfestigkeit des Leichtmetall-Ölabstreifringes 5 ist der vorzugsweise aus einer Aluminium-Legierung gestaltete Ölabstreifring 5 mit einer die Ringoberfläche bedeckenden Verschleißschutzschicht 10 versehen. Diese Ausgestaltung ist in Verbindung mit einer am Ringinnenumfang des Ölabstreifringes 5 vorgesehenen Umfangsnut 11 zur Aufnahme eines als Schlauchfeder 12 gestalteten Federelementes 6 im Hinblick auf geringe Reibung zwischen Schlauchfeder 12 und der Verschleißschutzschicht 10 besonders vorteilhaft durch geeignete Materialwahl. Damit ist für die in der Umfangsnut 11 mit Spiel angeordnete Schlauchfeder 12 eine für die Erzielung hohen Formfüllvermögens erforderliche Beweglichkeit gegeben.

Bei der Ausgestaltung eines Leichtmetall-Ölabstreifringes 5 aus einer Hartstoffkörper enthaltenden Aluminium-Legierung kann zur guten Beweglichkeit der Schlauchfeder 12 in der Umfangsnut eines gesonderte Gleitschicht vorgesehen sein.

Mit dem hohen Formfüllvermögen des erfindungsgemäßen Leichtmetall-Ölabstreifringes 5 ergibt sich eine relativ große Menge abgestreiften Öles von der Zylinderwandung 8, wofür zur einwandfreien Aufrechterhaltung der Funktion dieses Ölabstreifringes 5 unterhalb diesem im Kolben 1 eine umlaufend angeordnete Ausnehmung 7 vorgesehen ist, die mit in das Kolbeninnere gerichteten Drainage-Kanälen 13 in Verbindung steht.

Durch das hohe Formfüllvermögen des erfindungsgemäßen Leichtmetall-Ölabstreifringes 5 kann dieser in Kombination mit einem Kompressionsring 14 in vorteilhafter Weise zur Ausgestaltung eines Zwei-Ring-Kolbens 1 einer Brennkraftmaschine dienen.

Zur Aufrechterhaltung des hohen Formfüllvermögens ist der Verschleiß des erfindungsgemäßen Leichtmetall-Ölabstreifringes 5 durch eine minimale Rauheit der Zylinderwandung 8 sicherzustellen, wobei eine arithmetische Mittenrauhigkeit Rₐ <0,1µm und eine gemittelte Rauhtiefe R_{z} <2,0µm vorteilhaft sind.

## Patentansprüche

1. Kolbenringanordnung für Kolben von Hubkolbenmaschinen, insbesondere Brennkraftmaschinen,
umfassend einen in einer Nut (4) des Kolbens (1) angeordneten Ölabstreifring (5) mit einem vorbestimmten Höhen/Breiten-Verhältnis H/B, der von einem auf den Ringinnenumfang radial nach außen wirkenden Federelement (6) beaufschlagt ist, und dem ferner eine das abgestreift Öl aufnehmende Ausnehmung (7) im Kolben (1) zugeordnet ist,
**dadurch gekennzeichnet,**
**dass** der Ölabstreifring (5) ein gegen Verschleiß geschützt ausgebildeter Leichtmetallring mit einem Höhen/Breiten-Verhältnis H/B von ca. 1,5 ist, dass weiter der Ölabstreifring (5) als Einstegring in der Ausführung eines Minuten- bzw. Nasen-Minutenringes gestaltet ist, wobei dem aus einer Aluminium-Legierung mit einer die Ringoberfläche bedeckenden Verschleißschutzschicht (10) und/oder aus einer Hartstoffkörper enthaltenden Aluminium-Legierung gebildeten Ölabstreifring (5) im Kolben (1) eine umlaufend angeordnete Ausnehmung (7) mit in das Kolbeninnere gerichteten Drainage-Kanälen (13) zugeordnet ist.

2. Kolbenringanordnung nach Anspruch 1, **dadurch gekennzeichnet, dass** der Leichtmetall-Ölabstreifring (5) am Ringinnenumfang eine mit einem als Schlauchfeder (12) gestalteten Federelement (6) korrespondierende Umfangsnut (11)aufweist, die ebenfalls von der Verschleißschutzschicht, (10) bedeckt ist.

3. Kolbenringanordnung nach Anspruch 1 und 2, **dadurch gekennzeichnet, dass** der Leichtmetall-Ölabstreifring (5) in Verbindung mit einem Kompressionsring (14) Verwendung findet bei einem Zwei-Ring-Kolben (1) einer Brennkraftmaschine.

## Claims

1. A piston ring arrangement for pistons of reciprocating engines, especially internal combustion engines,
comprising an oil control ring (5) in a groove (4) in the piston (1), having a preset height/width ratio (H/B), acted upon by a spring element (6) acting radially from the exterior on the inner periphery of the ring, and associated with a recess (7) in the piston (1) for receiving the wiped-off oil,
**characterised in that**
the oil control ring (5) is a light-metal ring protected against wear and with a height/width ratio (H/B) of about 1.5, and the oil control ring (5) is a single-web ring in the form of a taper-face compression ring or scraper ring, wherein the ring (5), formed of an aluminium alloy with an anti-wear layer (10) covering its surface and/or in the form of an aluminium alloy containing a hard-material body, and the oil control ring (5) is associated with a peripheral recess (7) in the piston (1) with drainage passages (13) leading into the piston interior.

2. A piston ring arrangement according to claim 1, **characterised in that** on its inner periphery the light-metal oil control ring (5) has a peripheral groove (11) corresponding to a spring element (6) in the form of a hose spring (12) and likewise covered by the anti-wear layer (10).

3. A piston ring arrangement according to claims 1 and 2, **characterised in that** the light-metal oil control ring (5) is used in conjunction with a compression ring (14) in a two-ring piston (1) of an internal combustion engine.

## Revendications

1. Dispositif de segments de piston pour machines à pistons alternatifs, en particulier pour moteurs à combustion interne,
comprenant un segment racleur d'huile (5) logé dans une rainure (4) du piston (1) avec un rapport prédéfini hauteur/largeur H-L, sollicité par un ressort (6) agissant à la périphérie intérieure du segment radialement vers l'extérieur, et auquel est associé un évidement (7) du piston (1) pour recevoir l'huile raclée,
**caractérisé en ce que**
le segment racleur d'huile (5) est en alliage léger protégé contre l'usure formé avec un rapport hauteur/largeur H/L d'environ 1,5 et le segment racleur d'huile (5) est formé en tant que segment de barrette dans la réalisation d'un anneau de piston à faible conicité ou d'un racleur d'huile, un évidement périphérique (7) du piston (1) avec des canaux de drainage (13) orientés dans la partie intérieure du piston étant associé au segment racleur d'huile (5) constitué d'un alliage d'aluminium avec une couche de protection contre l'usure (10) le recouvrant en surface et/ou d'un alliage d'aluminium contenant un corps en matières dures.

2. Dispositif de segments de piston selon la revendication 1,
**caractérisé en ce que**
le segment racleur d'huile en alliage léger (5) présente une rainure (11) périphérique intérieure correspondant à un ressort (6) formé en tant que ressort tubulaire (12) et la rainure (11) est également recouverte par la couche de protection contre l'usure (10).

3. Dispositif de segments de piston selon la revendication 1 et 2,
**caractérisé en ce que**
le segment racleur d'huile en alliage léger (5) en liaison avec un segment de compression (14) est utilisé dans un piston (1) à deux segments d'un moteur à combustion interne.
